Europäisches Patentamt

European Patent Office

Office européen des brevets

(11) Publication number: **0 053 943**
**B1**

(12) **EUROPEAN PATENT SPECIFICATION**

(45) Date of publication of patent specification: **23.07.86**

(51) Int. Cl.⁴: **B 05 B 15/12, B 05 B 15/04**

(21) Application number: **81305797.3**

(22) Date of filing: **08.12.81**

(54) **Improved powder spray booth apparatus.**

(30) Priority: **08.12.80 US 214191**

(43) Date of publication of application:
**16.06.82 Bulletin 82/24**

(45) Publication of the grant of the patent:
**23.07.86 Bulletin 86/30**

(84) Designated Contracting States:
**BE DE FR GB IT**

(56) References cited:
**WO-A-79/00478**
**GB-A-2 035 845**
**US-A-4 277 260**

(73) Proprietor: **NORDSON CORPORATION**
**555 Jackson Street P. O. Box 151**
**Amherst Ohio 44001 (US)**

(72) Inventor: **Lissy, Gunter J.**
**109 Northwood Hollow**
**Amherst Ohio 44001 (US)**

(74) Representative: **Allen, Oliver John Richard**
**Lloyd Wise, Tregear & Co. Norman House**
**105-109 Strand**
**London, WC2R 0AE (GB)**

Courier Press, Leamington Spa, England.

## Description

The invention relates generally to powder coating art, and more particularly relates to a powder spray booth and powder recovery system.

In the practice of powder coating, a powdered resin is applied to a substrate, and then the substrate and powder are heated so that the powder melts and when subsequently cooled, forms a solid continuous coating on the substrate. The powder is generally sprayed onto the substrate. An electrostatic charge is generally applied to the sprayed powder so as to enhance the quantity of powder which attaches to the substrate and to assist in retaining the powder on the substrate. These electrostatic powder spraying techniques are well known and widely practiced commercially.

By and large, powder deposition is performed in a booth, a controlled area wherein any oversprayed powder which is not deposited on the substrate is collected. Conventionally, the containment of the powder in the booth is aided by an exhaust system which creates a negative pressure within the booth and causes the oversprayed powder to be drawn out of the booth to powder recovery filtering devices. In some systems, the oversprayed powder is collected and is merely saved for future use, while in others it is recycled automatically to the application device. In very nearly all powder spray applications though, the oversprayed material must be collected and recycled since it generally represents substantially more than half of the sprayed material.

Collection of the oversprayed material generally involves entraining the oversprayed powder in an air stream withdrawn from the powder booth, conveying that powder entrained air stream to a powder recovery system and there separating the powder from the air. Commonly, the separation is effected by some form of filter or cyclone separation.

One of the most critical aspects of all powder recovery systems is that of avoiding explosions of the powder conveying and recovery equipment. Very nearly all burnable powders, when entrained in air in burnable concentrations, are subject to burning and explosion and powdered resins or paints are no exception. The powder spray booth of GB—A—2035834 eliminates explosion hazards by venting the powder recovery system and the powder collection chamber of the system back into the spray booth without any substantial air flow restrictions between the powder collection chamber and the spray booth. Consequently if a fire does occur in the spray booth, and spread to the powder recovery chamber, there is no opportunity for an explosion because there is no place within the system for a pressure build up and consequent explosion.

The powder spray booth of GB—A—2035834 collects oversprayed powder in an air stream withdrawn from the bottom of the booth and then turned and conveyed upwardly through a filter chamber to a clean air chamber.

A problem with powder spray booths of this type, is the difficulty of moving the collected powder into a powder pump operative to return the powder to a recycle system. Heretofore, the powder has simply been collected in a funnel shaped hopper operative to flow the collected powder downwardly into the pump. Often times though, and particularly when spraying high density powders, the powder has had a tendency to collect and build on the walls of the hopper rather than falling by gravity or being drawn into the powder pump.

In accordance with the invention, a powder spray booth and collection apparatus comprises a booth providing a partly enclosed controlled area for powder coating a substrate, a powder collection area located underneath the booth, a passage providing a substantially unrestricted air flow path between the booth and the powder collection area, and air chamber open to the powder collection area through one or more filter chambers to prevent powder from entering the air chamber, and an air flow path extending between the booth and the filter chamber(s) and undergoing a change of direction therebetween, characterised in that the area of bottom surface of the powder collection area is substantially horizontal and equal to the cross sectional area of the filter chamber(s) and the air flow passage connecting the booth and the powder collection area so that powder falls freely and directly onto the bottom surface, both from the filters in the filter chamber(s) and through air passing from the air passage to the filter chamber(s), the said bottom surface being in the form of an air slide sloping downwardly to a powder exit.

Such an arrangement provides an improved spray booth/recovery system which provides improved safety relative to prior art systems and which overcomes the problem of powder collecting upon the walls of the hopper of the recovery system.

Preferably, a blower is provided to create negative pressure in the air chamber so that powder laden air is drawn down through the opening in the floor of the booth into the collection area immediately below the booth, and thence upward through filters to the clean air chamber. This filtered air having only traces of fine powder in a non-explosive ratio, is withdrawn from the clean air chamber through the blower, and passed to an absolute filter for final filtering.

The air slides are preferably positioned beneath the filter chamber whereby the oversprayed powder is collected, fluidized and flowed to a venturi powder removal pump operative to return the collected powder to a recycle system.

The powder collection chamber is open to the interior of the spray booth through a relatively unrestricted opening so that any fire in the powder collection chamber is directly vented into the booth without any significant restriction therebetween. The bottom of the powder collection chamber is defined by a plurality of sloping wall, fluidized bed air slides, the bottoms of which are open to powder pumps operative to pump the collected powder back to a recycle system.

The primary advantage of this invention is that it more effectively and safely collects and recycles powders and particularly high density powders which have heretofore presented collection problems.

The invention will now be further described by way of example with reference to the accompanying drawings in which:

Figure 1 is a perspective view of a spray coating booth having a recovery/collection system in accordance with the invention,

Figure 2 is a partially diagrammatic cross sectional view illustrating the interior construction of the recovery/collection system of the booth of Figure 1,

Figure 3 is an enlarged cross sectional view of a circled portion of the recovery/collection system illustrated in Figure 2.

Figure 4 is a cross sectional view taken on line 4—4 of Figure 2.

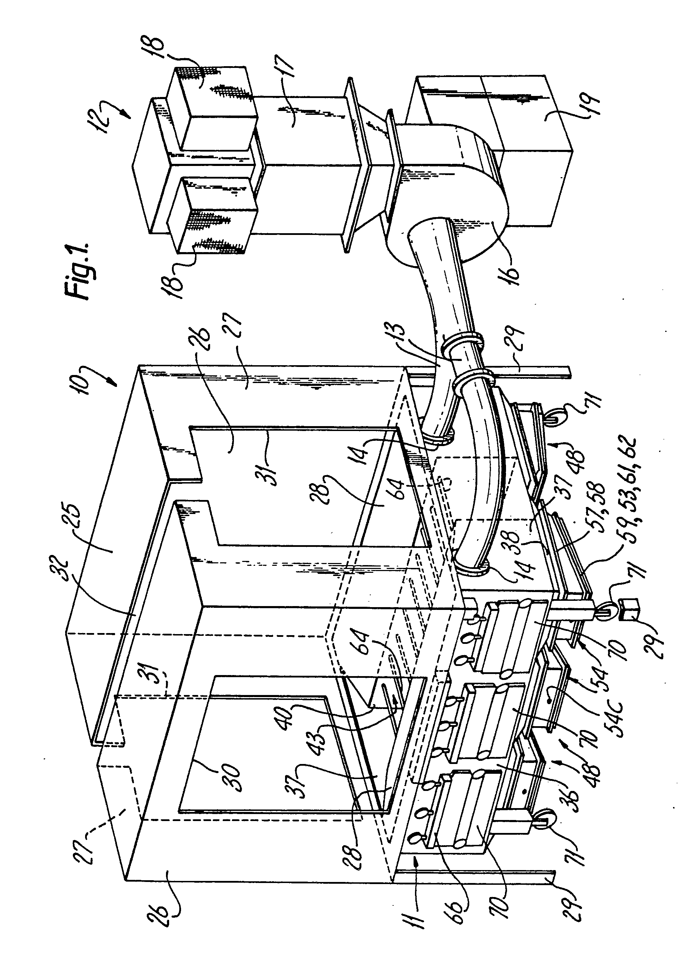

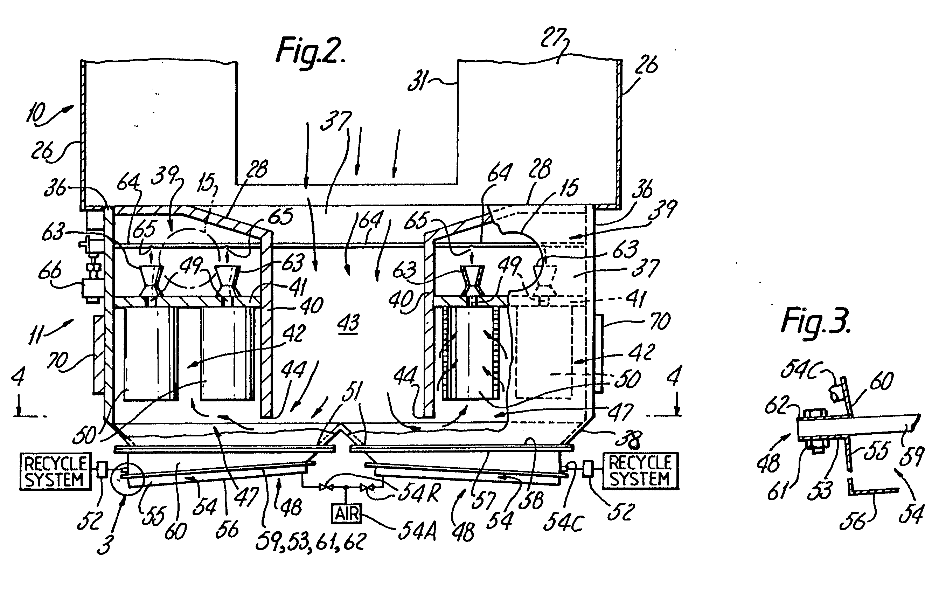

Referring first to Figure 1, a system incorporating the invention of this application comprises a spray booth 10 having a base 11, which comprises the filter/recovery system for the powder, and an absolute filter 12 connected to the base 11 through ductwork 13. The ductwork 13 connects on either side of one end of the base 11 by means of quick-disconnect connections 14 to holes 15 (see Figure 2) in the base. This ductwork 13 communicates the interior of the base 11 to a blower 16 which creates a negative pressure in the base 11 as will be more fully discussed later. The blower 16 exhausts into a plenum 17 having filters 18 which clean any air discharged therethrough. The blower 16 can be mounted on a base 19 for convenience.

The spray booth 10 defines a controlled area for spraying powder and comprises generally a ceiling portion 25, opposed side wall portions 26, opposed end walls 27 and a floor area 28. The floor area 28, in this embodiment, actually comprises the top of the base or recovery/collector unit 11 and hence the two elements are designated by a common reference numeral herein. The booth 10 is supported by legs 29 over the base 11. Openings are provided in one of the side walls 26 of the booth 10 and both end walls 27. The opening 30 in one side wall 26 provides access into the interior of the booth 10 for spraying equipment, or for access for a man to enter the booth himself. Openings 31 are provided in each end wall 27 for product to be transported through the booth 10 for spraying. A slot 32 in the ceiling portion 25 of the booth allows the passage of conveyor hooks or the like from an overhead conveyor (not shown) to carry the articles to be coated (not shown) through the booth 10.

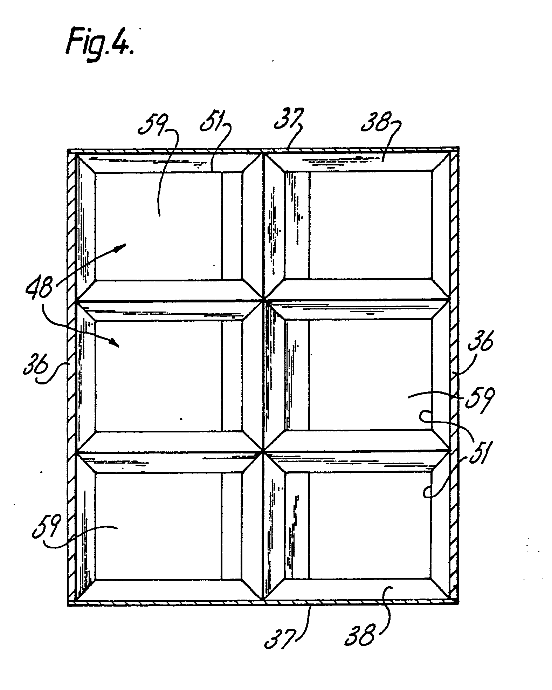

Referring now to Figures 2, 3 and 4, the details of the base or recovery/filter unit 11 of the booth 10 can be seen.

The base 11 is generally comprised of opposed exterior side walls 36, end walls 37, the upper wall 28, and a bottom wall 38. As noted above, the upper wall 28 also forms the floor of the booth. Along each of the opposed side walls 36 of the base 11 is a clean air chamber 39 below the floor 28 of the booth 10, defined between part of an exterior side wall 36 of the base, the upper wall 28 of the base, part of an inner side wall 40 and a bottom chamber wall 41. Filter chambers 42 are located below these clean air chambers 39, the chambers 42 being defined by the walls 36, 37, 40 and 41.

The holes 15 in one end wall 37 connect each clean air chamber 39 to the ductwork 13 (see Figure 1), so that a negative pressure may be created in the clean air chamber 39.

The interior side wall 40 extends downward from the floor 28 and forms a centrally located air flow passage 43 directly from the booth to a powder collection area including a pair of powder collection chambers 47 located on opposite sides of passage 43. The centrally located air flow passage 43 is elongated in the direction of travel of the articles to be coated and extend across the whole length of the booth 10. It is of substantial cross-sectional area so as not to present a restriction which would result in a "confined area" subject to explosion.

Each clean air chamber 39 is provided with multiple holes 49 on the underside through the bottom walls 41. Each of these holes 49 is capped by a static cartridge type filter 50. The filters 50 can be removably attached to the chamber 39 by any suitable means. In this embodiment the holes in the bottom wall 41 of the clean air chamber 39, and associated filter elements 50, are arranged in three banks of six filters one each side of the unit so that there is a total of 18 filters on each side, 36 filters in all. In the plane of Figure 2, four filters 50 can be seen, two on each side.

Below each of the six bands of filters, the bottom 38 of the base 11 tapers downward into six openings 51. Each of these openings 51 is capped by an air slide 48 within which oversprayed powder or powder filtered out of the air by the filters 50 is collected. At the outer end of each air slide 48 is a venturi pump 52 or other suitable means to receive the powder from the hopper and to transport the collected powder to a recycling system which may be in the form of a storage bin or may be directed back to the spray gun from which the powder was originally ejected into the booth.

The air slides 48 are each provided around their upper edges with a laterally extending flange 57, which flange is secured by bolts (not shown) to a correspondingly shaped flange 58 which extends outwardly from the bottom openings 51 of the base 11. Between the flanges 57 of the hopper and the flanges 58 of the base 11, there is preferably a seal or gasket (not shown).

Each air slide 48 comprises an outwardly and downwardly sloping bottom wall 59 surrounded by side walls 60 which extend between the bottom wall 59 and the edge of flange 57. The bottom wall 59 is formed from an air pervious membrane so that air may be forced upwardly through the bottom wall 59 to fluidise powder contained within the air slide, as explained more fully hereinafter.

Beneath the bottom wall 59 of each air slide 48 there is a closed air chamber 54 formed by side walls 55 and a bottom wall 56. Around the top edges of the side walls 55 of each air chamber, there is a flange 53 (see Figure 3) which is secured by bolts and nuts 61 to a flange 62, the flange 62 extends outwardly from the bottom edges of the side walls 60 of the air slide 48. The outer edges of the air pervious bottom wall 59 of the air slide is sandwiched between these flanges 53, 62.

Air at, a pressure above that of the atmosphere is supplied to the closed air chamber 54 from an air pressure source 54A. This air pressure flows from the source through pressure regulators 54R to an air inlet port in the side wall of each chamber 54. This air pressure passes upwardly through the air pervious bottom wall membrane where it is operative to fluidise any powder or load within the interior of the air slide. Because the bottom wall 59 of the air slide slopes outwardly, preferably at an angle of approximately five degrees, the fluidised powder tends to move outwardly toward an outlet conduit 54C which connects the interior of the air slide to one of the venturi pumps 52.

Interiorly of the clean air chamber 39, venturi throats 63 are situated above and around each of the holes 49 through which filtered air passes. A series of pipes 64 extend across the base 11, one each in alignment with all four of the venturi throats 63, and hence the filters 50, across in a row. Each of the pipes 64 has four holes (as at 65) in its underside which are aligned one each with a respective venturi throat 63. An air solenoid 66 associated with each pipe 64 and mounted exteriorly of one outside wall 36 is effective to discharge a 15 to 20 millisecond burst of air into a respective pipe 64, and thus out of the holes 65 in the underside of the pipe 64 into each venturi throat 63. The burst causes momentary reverse air flow through the filters 50, and dislodges collected powder from the filter material. The dislodged powder falls into a respective air slide 48. The solenoids 66 are sequentially operated through any suitable control mechanism well known in the art, so that only one bank or row is cleaned at a time. Therefore, there is no net interruption of the air flow through the filter/collector unit 11.

Access doors 70 are mounted on the exterior side walls 36 for servicing or replacing the filters 50. The whole base 11 is mounted on wheels 71 to allow the base 11 to be easily removed from underneath the spray booth 10, so that a new base 11 can be substituted therefor in order to facilitate the spraying of a new powder or colour, or to service the unit.

It should be noted that the quantity or type of filter 50 is selected in this embodiment to achieve improved filter cleaning capabilities. It has been noted that the velocity of powder burdened air penetrating the filters 50 is directly related to the total surface area of a filter or banks of filters 50. An increased filter surface area was found to be particularly desirable to reduce powder penetration into the filtering elements of the filters 50 because the velocity of the air across the filter medium was substantially reduced. This facilitates cleaning by blow-back or reverse air flow as hereinbefore described. Also the reduced velocity achieved by increased surface area of the filters 50 minimises the amount of powder that returns to the surface of each filter 50 after a reverse air burst. The filters 50 individually and collectively thus operate more efficiently while minimising powder build-up in the filtering area. Overall air flow through the collection chamber is thus maintained. In turn the efficiency of the fan or blower 16 is sustained along with that of the overall booth 10. In this particular embodiment, each of the numbers and type of filters is selected so that the velocity of the air passing therethrough is about 1.8 feet per minute ($9.1 \times 10^{-3}$ ms$^{-1}$) for an air flow through the booth 1 and fan 4 of about 1.8 cubic feet per minute ($8.5 \times 10^{-4}$ m$^3$s$^{-1}$).

In operation of the booth 10 and powder recovery unit 11, the blower 16 is first activated so as to create a negative pressure in the clean air chamber 39 and thereby cause air flow inwardly from outside the booth through the side wall opening 30, end wall openings 31, and conveyor opening 32 at the top of the booth. This air flow, after passing through the booth, flows downwardly through the floor of the booth via central air flow passage 43, around the bottom 44 of the interior side walls 40, and into the powder collection areas 47. The air flow then is caused to change in direction substantially 180° from the generally downward direction in which it is moving as it flows past the bottom edge 44 of the side walls 40 into an upwardly directed air flow into the filter chambers 42 through the filters 50, and into the clean air chambers 39. The clean air is then caused to flow through the ductwork 13 to and through the absolute filter 12 wherein any residual powder which has passed through the filter 50 is extracted. The filter cartridges 50 are generally effective to extract more than 99% of the powder entering the powder recovery system 11 so that very little powder reaches the filters 18 of the absolute filter 12. Clean air is then exhausted from the absolute filter 12 back into the plant or to atmosphere.

As soon as the air flow is initiated by the blower 16, the powder may be turned on and sprayed via a gun or any other conventional applicator into the booth and onto parts (not shown) as the parts are conveyed through the booth. Conventionally, the powder particles are charged with a very high voltage electrostatic charge and the parts are grounded. The electrostatic charge increases the percentage of powder deposited onto the parts and assists in retaining those particles on the parts. All oversprayed powder is maintained in the booth via the incoming air flow through the booth openings. The oversprayed material either falls by gravity to the bottom of the booth or becomes entrained in the air flow moving downwardly in the booth into the central air flow passage 43. Most of the powder entering that passage 43 falls by gravity to the bottom of one of the air slides 48. A substantial portion of the airborne remainder of the powder is caused by a combination of gravity and centrifugal force to fall out of the air and collect in the bottom of the air slides 48 as the air flow is changed from a generally downward direction in the centre chamber 43 to an upward direction into the filters 50. A small percentage of the powder collects on the exterior of the filter cartridges 50 and that surface collected powder is periodically removed from the surfaces by reverse burst of air flow through the air flow pipes 64 and holes 65 as was explained hereinabove. That short burst of reverse air flow, which burst in on the order of a fraction of a second in duration, causes any powder adhered to the cartridge to be dislodged and fall to the bottom of the air slides 48. Within the air slides, the powder is fluidised by air flow moving upwardly through the air pervious bottom wall 59 from the bottom air chamber 54. This fluidised powder gradually moves outwardly and downwardly over the sloping bottom wall of the air slides until, at the outer wall of the air slide, the powder is picked up by the venturi pump 52 and pumped back to a recycle system as is conventional in this art.

## Claims

1. A powder spray booth and collection apparatus comprising a booth providing a partly enclosed controlled area for powder coating a substrate, a powder collection area located underneath the booth, a passage providing a substantially unrestricted air flow path between the booth and the powder collection area, an air chamber open to the powder collection area through one or more filter chambers to prevent powder from entering the air chamber, and an air flow path extending between the booth and the filter chamber(s) and undergoing a change of direction therebetween, characterised in that the area of bottom surface (59) of the powder collection area (47) is substantially horizontal and equal to the cross sectional area of the filter chamber(s) (42) and the air flow passage (43) connecting the booth (10) and the power collection area (47) so that powder falls freely and directly onto the bottom surface (59), both from the filters (50) in the filter chamber(s) and through air passing from the air passage (43) to the filter chamber(s) (42), the said bottom surface (59) being in the form of an air slide (48) sloping downwardly to a powder exit (54c).

2. A powder spray booth and collection apparatus as claimed in Claim 1, wherein the air flow path between the booth (10) and the filter chamber(s) (42) undergoes a change of direction of at least 90°.

3. A powder spray booth and collection apparatus as claimed in Claim 1 wherein the air flow path between the booth (10) and the filter chamber(s) (42) undergoes a change of direction of substantially 180°.

4. A powder spray booth and collection apparatus as claimed in any preceding Claim wherein a blower (16) is provided to create a negative pressure in at least part of the apparatus to cause powder to flow through the passage (43) from the booth (10) to the powder collection area (47).

5. A powder spray booth and powder collection apparatus as claimed in any preceding Claim wherein the powder collection area (47) is defined by a chamber (11) comprising an upper section and a lower section, the lower section including the air slide (48), and the filters (50) being located within the upper section.

6. A powder spray booth and collection apparatus as claimed in any preceding Claim wherein means (52) are provided for removing collected powder from the downstream end of the air slide (48).

7. A powder spray booth and powder collection apparatus as claimed in Claim 6 in which the collected powder recovering means comprises a venturi pump (52).

8. A powder spray booth and powder collection apparatus as claimed in Claim 7 wherein the venturi pump (52) transports collected powder from the downstream end of the air slide (48) to a powder recycling system.

9. A powder spray booth and powder collection apparatus as claimed in any preceding Claim in which means for forcing air flow through the pervious bottom wall (59) of the air slide (48) includes an air chamber (54) located beneath the bottom wall (59), and means (54A) for supplying air at a pressure above the atmospheric pressure to the air chamber (54).

10. A powder spray booth and powder collection apparatus as claimed in any preceding claim in which the bottom surface (59) of the powder collecting area (47) comprises a multitude of separate airslides (48), one being located beneath each filter chamber (42) and a part of the air passage (43) and having an area substantially equal to the cross-sectional area of the filter chamber (42) positioned thereabove together with the area of the said part of the air passage (43).

## Revendications

1. Appareil pour pulvériser de la poudre dans une cabine et recueillir la poudre, comprenant une cabine assurant un espace partiellement fermé sous contrôle pour revêtir de poudre un substrat, une zone pour recueillir la poudre se trouvant au-dessous de la cabine, un passage assurant un parcours d'écoulement de l'air pratiquement dégagé entre la cabine et la zone de recueil de la poudre, une chambre d'air ouverte sur la zone de recueil de la poudre par l'intermédiaire d'une ou plusieurs chambres filtrantes pour empêcher la poudre de pénétrer dans la chambre d'air et un parcours d'écoulement de l'air s'étendant entre la cabine et la (ou les) chambres filtrantes et subissant un changement de direction entre celles-ci, caractérisé en ce que la surface inférieure 59 de la zone de recueil de la poudre 47 est sensiblement horizontale et égale à la surface en coupe transversale de la (ou des) chambres filtrantes 42 et du passage d'écoulement d'air 43 reliant la cabine 10 à la zone de recueil de la poudre 47 afin que la poudre tombe librement et directement sur la surface inférieure 59, à la fois des filtres 50 de la (ou des) chambres filtrantes et dans l'air s'écoulant du passage d'air 43 à la (ou aux) chambres filtrantes 42, ladite surface inférieure 59 ayant la forme d'un tiroir à air 48 incliné en bas vers un orifice de sortie de la poudre 54 c.

2. Appareil pour pulvériser de la poudre dans une cabine et recueillir la poudre selon revendication 1, caractérisé en ce que le parcours d'écoulement d'air situé entre la cabine 10 et la (ou les) chambres filtrantes 42 subit un changement de direction d'au moins 90°.

3. Appareil pour pulvériser de la poudre dans une cabine et recueillir la poudre selon revendication 1, caractérisé en ce que le parcours d'écoulement d'air situé entre la cabine 10 et la (ou les) chambres filtrantes 42 subit un changement de direction de pratiquement 180°.

4. Appareil pour pulvériser de la poudre dans une cabine et recueillir la poudre selon l'une quelconque des revendications précédentes, caractérisé en ce qu'un ventilateur soufflant 16 est prévu pour créer une pression négative au moins dans une partie de l'appareil pour faire écouler la poudre par le passage 43 de la cabine 10 vers la zone de recueil de la poudre 47.

5. Appareil pour pulvériser de la poudre dans une cabine et recueillir la poudre selon l'une quelconque des revendications précédentes, caractérisé en ce que la zone de recueil de la poudre 47 est définie par une chambre 11 comprenant une section supérieure et une section inférieure, la section inférieure comprenant le tiroir à air 48 et les filtres 50 situés à l'intérieur de la section supérieure.

6. Appareil pour pulvériser de la poudre dans une cabine et recueillir la poudre selon l'une quelconque des revendications précédentes, caractérisé en ce qu'un dispositif 52 est prévu pour dégager la poudre recueillie de l'extrêmité inférieure (en aval) du tiroir à air 48.

7. Appareil pour pulvériser de la poudre dans une cabine et recueillir la poudre selon revendication 6, caractérisé en ce que le dispositif de récupération de la poudre recueillie comprend une pompe venturi 52.

8. Appareil pour pulvériser de la poudre dans une cabine et recueillir la poudre selon revendication 7, caractérisé en ce que la pompe venturi 52 transporte la poudre recueillie de l'extrêmité inférieure du tiroir à air 48 vers un système de recyclage de la poudre.

9. Appareil pour pulvériser de la poudre dans une cabine et recueiller la poudre selon l'une quelconque des revendications précédentes, caractérisé en ce que le dispositif pour forcer l'air d'écoulement à traverser la paroi inférieure perméable 59 du tiroir à air 48 comprend une chambre d'air 54 située au-dessous de la paroi inférieure 59 et un dispositif 54A pour fournir l'air à une pression supérieure à la pression atmosphérique, à la chambre d'air 54.

10. Appareil pour pulvériser de la poudre dans une cabine et recueillir la poudre selon l'une quelconque des revendications précédentes, caractérisé en ce que la surface inférieure 59 de la zone de recueil de la poudre 47 comprend une multitude de tiroirs à air individuels 48, l'un se trouvant au-dessous de chaque chambre filtrante 42 et d'une partie du passage d'air 43 et ayant une surface sensiblement égale à la surface en coupe transversale de la chambre filtrante 42 se trouvant au-dessus et à la surface de ladite partie du passage d'air 43.

**Patentansprüche**

1. Eine Pulversprühkabinen- und -sammelvorrichtung, umfassend eine Kabine in Form einer teilweise geschlossenen, überwachten Fläche zur Pulverbeschichtung eines Trägermaterials, eine Pulversammelfläche unterhalb der Kabine, einen Kanal zur Schaffung einer im wesentlichen uneingeschränkten Luftstrombahn zwischen der Kabine und der Pulversammelfläche, eine Luftkammer, die über eine oder mehrere Filterkammern mit der Pulversammelfläche in Verbindung steht, um zu verhindern, daß Pulver in die Luftkammer gelangt, sowie eine zwischen der Kabine und der Filterkammer/den Filterkammern verlaufende Luftstrombahn, die im dazwischenliegenden Bereich eine Richtungsänderung erfährt, dadurch gekennzeichnet, daß die Bodenfläche (59) der Pulversammelfläche (47) im wesentlichen horizontal verläuft und der Querschnittsfläche der Filterkammer(n) (42) entspricht, und der Luftstromkanal (43) die Kabine (10) und die Pulversammelfläche (47) so miteinander verbindet, daß Pulver frei und direkt auf die Bodenfläche (59) fällt, und zwar sowohl von den Filtern (50) in der Filterkammer/den Filterkammern und durch die Luft, die über den Luftkanal (43) in die Filterkammer(n) (42) strömt, wobei die genannte Bodenfläche (59) als Luftrinne (48) ausgeführt ist, die eine Neigung nach unten zu einem Pulveraustritt (54c) aufweist.

2. Eine Pulversprühkabinen- und -sammelvorrichtung gemäß Amspruch 1, wobei die Luftstrombahn zwischen der Kabine (10) und der Filterkammer/den Filterkammern (42) eine Richtungsänderung von zumindest 90° erfährt.

3. Eine Pulversprühkabinen- und -sammelvorrichtung gemäß Anspruch 1, wobei die Luftstrombahn zwischen der Kabine (10) und der Filterkammer/den Filterkammern (42) eine Richtungsänderung von im wesentlichen 180° erfährt.

4. Eine Pulversprühkabinen- und -sammelvorrichtung gemäß irgendeinem der vorstehenden Ansprüche, wobei ein Gebläse (16) vorgesehen ist, um einen negativen Druck in zumindest einem Teil der Vorrichtung zu schaffen, um so zu bewirken, daß Pulver durch den Kanal (43) von der Kammer (10) zur Pulversammelfläche (47) fließt.

5. Eine Pulversprühkabinen- und -sammelvorrichtung gemäß irgendeinem der vorstehenden Ansprüche, wobei die Pulversammelfläche (47) aus einer Kammer (11) besteht, die einen oberen Abschnitt und einen unteren Abschnitt umfaßt, wobei der untere Abschnitt die Luftrinne (48) beinhaltet und die Filter (50) im oberen Abschnitt untergebracht sind.

6. Eine Pulversprühkabinen- und -sammelvorrichtung gemäß irgendeinem der vorstehenden Ansprüche, wobei Vorrichtungen (52) vorgesehen sind, um angesammeltes Pulver aus dem hinteren Abschnitt der Luftrinne (48) zu entfernen.

7. Eine Pulversprühkabinen- und -sammelvorrichtung gemäß Anspruch 6, wobei die Rückgewinnungsvorrichtung für angesammeltes Pulver eine Venturipumpe (52) umfaßt.

8. Eine Pulversprühkabinen- und -sammelvorrichtung gemäß Anspruch 7, wobei die Venturipumpe (52) angesammeltes Pulver aus dem hinteren Abschnitt der Luftrinne (48) zu einem Pulverrückführungssystem transportiert.

9. Eine Pulversprühkabinen- und -sammelvorrichtung gemäß irgendeinem der vorstehenden Ansprüche, wobei eine Vorrichtung, die den Luftstrom durch die durchlässige Bodenwand (59) der Luftrinne (48) lenkt, eine Luftkammer (54) unterhalb der Bodenwand (59) und eine Vorrichtung (54A) umfaßt, um die Luft bei einem über Atmosphärendruck liegenden Druck zur Luftkammer (54) zu befördern.

10. Eine Pulversprühkabinen- und -sammelvorrichtung gemäß irgendeinem der vorstehenden Ansprüche, wobei die Bodenfläche (59) der Pulversammelfläche (47) eine Vielzahl von separaten Luftrinnen (48) umfaßt, von denen eine unterhalb jeder Filterkammer (42) und eines Teils des Luftkanals (43) angeordnet ist und eine Fläche aufweist, die im wesentlichen der Querschnittsfläche der darüber angeordneten Filterkammer (42) zuzüglich der Fläche des genannten Teils des Luftkanals (43) entspricht.

Fig.1.

Fig.2.

Fig.3.

Fig.4.